# EUROPEAN PATENT APPLICATION

(11) **EP 0 904 858 A2**
(43) Date of publication of application: **31.03.1999**
(21) Application number: 98830531.4
(22) Date of filing: 10.09.1998
(51) Int. Cl.: B09C 1/00, C02F 11/00

(54) **Method and relative system for the controlled reclamation of polluted basin bottoms**

(30) Priority: 19.09.1997 IT FI970213
(71) Applicant: LABROMARE S.R.L., 57100 Livorno (LI) (IT)
(72) Inventor: Cafferata, Amerigo, 57014 Nugola, Collesalvetti (Livorno) (IT)
(74) Representative: Bardini, Marco Luigi

(57) **Abstract**

A method for the controlled reclamation of a bottom of a polluted basin comprising, in succession, the following steps: removal from the bottom of a superficial stratum containing polluted muds; separation from the muds of the solid particles having a granulometry greater than a predetermined value, by means of screening and centrifugation; clarification of the muds by means of adding flocculating substances; mechanical compression of the muds to extract the residual humidity; storing of the muds in removable containers for their transfer to a dump.

The reclamation system according to the above-mentioned method comprises a floating drawing unit (1), which supports means (6) for removing a polluted superficial stratum of the bottom, as well as an on-land treatment station (2) for the muds, hydraulically connected to said drawing unit.

## Description

The present invention relates to the field of reclamation of water environments, especially marine environments, and, in particular, it relates to a method for the controlled reclamation of polluted bottoms. The invention furthermore relates to a system for reclamation which operates according to the above-mentioned method.

Frequently, work executed in or near basins, particularly docks and canals of port areas, requires the excavation of the bottoms of the basins themselves for their rearrangement. These bottoms, due to the pollution of the port waters, are generally covered by a thick muddy stratum, formed by the sediment of pollutants and their progressive aggregation with inert materials.

Consequently, dredging gives rise to serious environmental problems, since the buckets or the rotary dispersion mills of centrifugal pumps, sinking into the mire, create turbulences which disperse pollutants in the column of water above. These pollutants can then be transported by currents and the movement of ships to areas that were previously unpolluted.

No reclamation system has yet been proposed to satisfactorily resolve this problem. There is great demand then for a method which would make the efficient reclamation of polluted bottoms possible while limiting, to the greatest possible extent, the induced turbulences, i.e. preventing the removal of the mire forming the superficial stratum of the bottom itself from causing significant water agitation in the work areas with consequent undesired dispersions. The removal must also be carried out as efficiently as possible, obtaining a mixture having a high concentration of solid particles.

It is an object of the present invention therefore to provide a method for the reclamation of polluted bottoms which permits to ensure both a high solid concentration in the dredged mixtures as well as minimal secondary pollution deriving from the agitation of sediments forming the bottom itself.

A further object of the present invention is to provide a reclamation system which operates according to the above-mentioned method.

These objects have been achieved with the method and system for reclamation of polluted bottoms according to the present invention, characterized in what defined by appended claims 1 and 4.

Other characteristics and advantages of the method and system for reclamation of polluted bottoms according to the present invention will become apparent from the following description of one of their possible embodiments, given as an example and not limitative, with reference to the attached drawings in which:
- figure 1 is a schematic top plan view of the system for reclamation according to the invention;
- figure 2 is a general pattern of the hydraulic and pneumatic arrangement of the system of figure 1;
- figure 3 is a side view of a water craft for use in the system of figure 1.

With reference to the above figures, the method according to the invention comprises first of all the removal of a superficial stratum of the bottom to be reclaimed, formed by polluted muds having a high percentage of humidity, represented in figure 3 and indicated at 34. The removal is carried out by filling a plurality of tanks immersed nearby the bottom, thanks to differences in hydrostatic load. The emptying of the tanks occurs by means of a compressed air system which pushes the muds to the surface through special ducts. All this is provided for by a special pump 6, described in detail hereinafter, which is installed on a suitable specific water craft 5.

Once the muds have been conveyed to land by means of a flexible hose 8, according to the invention they are subjected to a treatment comprising the following steps. A separation is carried out, by means of vibration screening, of the particles having a granulometry higher than a certain value, typically 8 mm. These particles, along with possible solid residues, are then evacuated for transport to a controlled dump.

The muds are then centrifuged to separate out the remaining sand which is subsequently dried and evacuated. The residual muds, sand-free and having a granulometry typically of less than 0.1 mm, are then subjected to a process of clarification in order to obtain their thickening. Therefore, they are added with a measured quantity of flocculating products, suited to induce, by means of a chemical/physical process of a known type, the thickening and subsequent precipitation of the solid particles present in the mixture.

The surface water can thus be moved away, whereas the muds are conveyed to be subjected to a final mechanical compression, in order to remove residual humidity and make them as thick as possible and suited to be moved by conventional mechanical means. At the end of the cycle, the material can either be subjected to further treatments which may be required due to a residual pollutant load, or it can be directly loaded and transported with suitable means to the controlled dump.

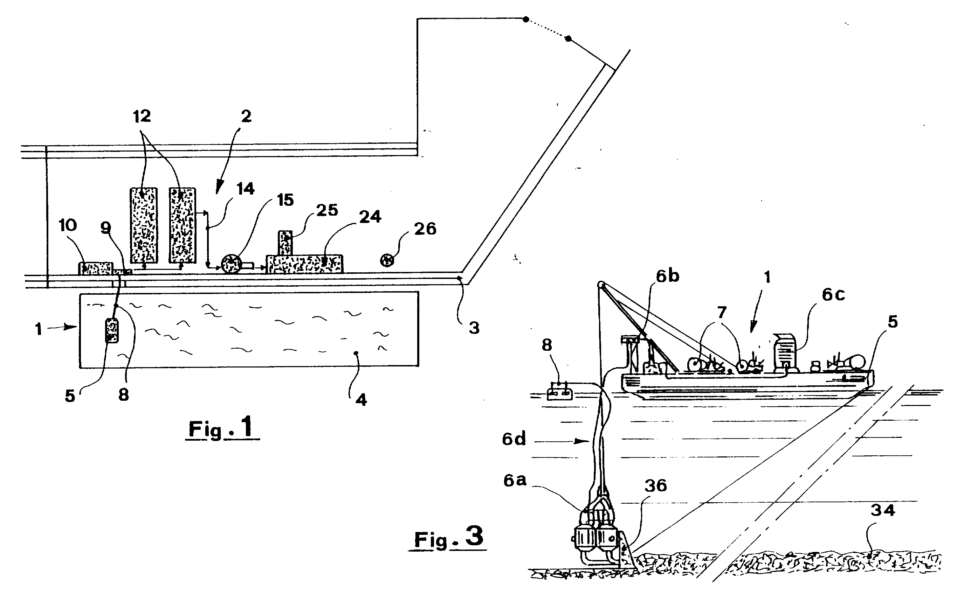

An embodiment of the method according to the present invention can be accomplished with the reclamation system schematically shown in the attached drawings, the configuration of figure 1 being obviously indicative and depending in general on the space available as well as plant needs which can vary from case to case.

The system comprises a floating drawing unit 1, movable on the water sheet, indicated at 4 in figure 1, above the bottom area to be reclaimed, and an on-land treatment station 2, placed on a wharf 3 or on a suitable floating pontoon, in a shore portion facing the sheet itself.

Drawing unit 1, illustrated in particular in figure 3, comprises a motorized boat 5 on which a pneumatic pump 6 is installed. The pump, chosen from among those of a known type for its particular suitability to this kind of use, is a component of great importance for the effectiveness of the entire system. Its operation is based on the use of compressed air for the cyclic emptying of three tanks, provided with automatically operated valves, whose filling with the material to be removed occurs on the basis of differences in hydrostatic load or, in case of very shallow waters, with the help of a vacuum system; all of this is accomplished without the employ of any mechanical apparatus for rotative dispersion or system using pressurised water sprays.

In particular, pump 6 comprises a body 6a, in which the tanks are arranged, which is suited to work immersed and in contact with the muds to be removed, a distributor 6b, which regulates the inflow of compressed air and the discharge of the same in each tank of body 6a, as well as a compressor 6c, the last two components being arranged on the surface, on board boat 5, and pneumatically and hydraulically connected to body 6a via ducts 6d.

On boat 5, winches 7 are also arranged to provide for the movement of body 6a which is dragged at a considerably low speed (1-2 m/min.), in order to avoid any roiling of the work area, so that special collector shovels 36, equipped with hard penetrating sharp grates, are pressed against the stratum of mire, which is forced to get into the shovels by the mechanical pressure action and then into the tanks due to the external hydrostatic load and/or the vacuum system.

In this way, it is possible to obtain a concentration of solids in the dredged mixture which normally exceeds 50% in volume. The low speed of the dragging avoids, as already said, roiling in the work area even when the mire has a high water content and low density, whereas, since shovels of different heights can be used, it is possible to dredge very thin layers of polluted bottom, thus avoiding to send to the successive treatment strata of sediment that are not polluted or that are polluted in such a way that they could be transported to the dump in a different and less costly manner.

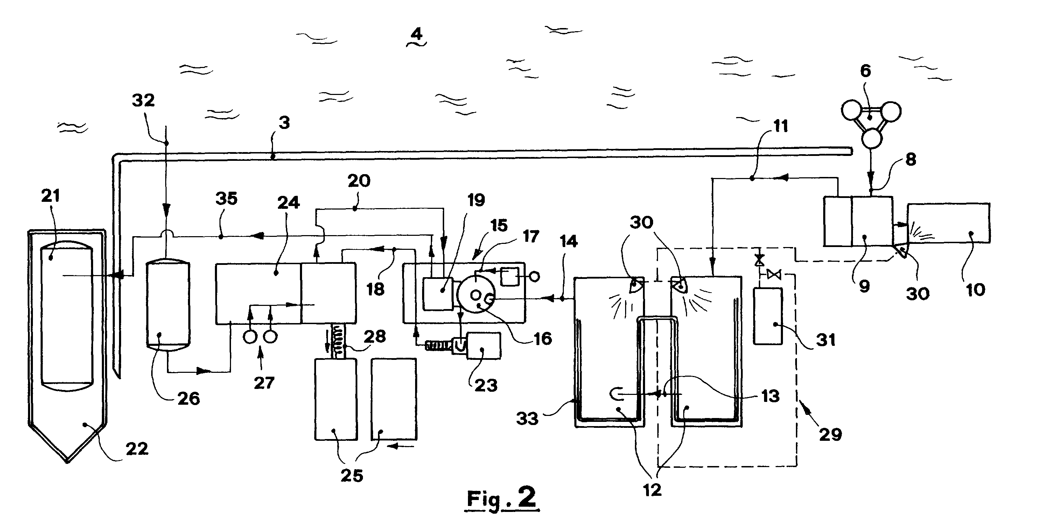

Between boat 5 and wharf 3, a piping 8 of flexible floating hoses is arranged, suited to convey the muds removed from pump 6 to land. The material to be treated is conveyed, in particular, to a vibrating screen (not shown) and then to one (in the depicted scheme) or more cyclones 9, which carry out the centrifugation thereof. The gross deposits are collected in a transportable container 10, while the muds output from cyclone 9 are transported, according to the line indicated at 11 in figure 3, towards a plurality of buffer tanks 12, two in the embodiment illustrated and communicating with one another through a line 13, which can store the material to ensure a regular feed to the successive step of the process. Basins 12, the presence of which is not in any case essential to the effectiveness of the system, are also equipped with a pneumatic system, schematically represented in figure 2 and indicated at 33, which homogenizes the material and keeps it in suspension in order to prevent the formation of deposits on the bottom of the receivers themselves.

Through a line 14, the treated muds are supplied to a clarifier 15, comprising a frusto-conical reservoir 16 to which a line 17 is also connected to supply a flocculating substance, for example of polymeric nature. In reservoir 16, the particles of mud which are thickened and weighed down by the flocculation process precipitate towards the bottom. The thickened muds are then conveyed to the center of the reservoir by means of a rotating scraper (not shown) and, from there, are withdrawn by means of an extraction pump 23 to be sent via a duct 18 to a belt filter press 24 which provides for the final mechanical compression of the material.

The clarified water is collected in a tank 19, to which a re-circulation line 20 is also connected, supplying for the water produced inside filter press 24 in the compression process. A duct 35 carries the water from tank 19 of the clarifier to a bin 21 for its temporary storage on board a tank barge 22.

Belt filter press 24 transforms the thickened muds coming from clarifier 15 into solid mud, thanks to the compression action of special sheets operated by means of a series of adjustable rollers arranged above and below the sheet themselves. The press is supplied, for the washing of the sheets, by water pumped from the sea along an intake piping 32 and stored in a tank 26. An additional group 27 is also provided for the feed of polymer which may be needed for a further flocculation process.

The solid mud output is loaded by means of a conveyor belt 28 into removable containers 25, loadable aboard suitable motorized vehicles for the transport of the material to a controlled dump.

An auxiliary compressed air system, generally indicated at 29 and whose lines are indicated in figure 2 by dashed lines, comprising a motorized compressor 31, is provided to feed both homogenization system 33 and spraying means 30, arranged inside container 10 and receivers 12, suited to nebulize a substance that kills the bad odors emanated from the material contained therein.

The above description of the system should obviously be considered merely schematic, i.e. limited to its macroscopic components. Detailed descriptions of all the accessory components of a known type, such as circulation pumps, valves, collection tanks, etc., whose arrangement to allow for the fulfilment of the cycle according to the reclamation method of the present invention is obvious to experts in the field, have, in fact, been omitted.

In some cases the removed mud may require further on site treatments, varying according to the characteristics of the material, before transport to the dump. Such treatments will be provided by adding suitable systems to the end of the cycle. Besides, a lung tank, not shown, can advantageously be provided right before belt press 24, to homogenize the load thereto.

Because of its modular structure, treatment station 2 can be set up very rapidly. It will also be appreciated that the structural simplicity of the drawing unit makes it possible to use a boat that is light and highly maneuverable.

It will be apparent from the foregoing that the reclamation method and system according to the present invention fully achieve the stated objects, allowing the removal of a mixture having a high concentration of sediments which, at the end of treatment, can be shoveled away. The method furthermore makes it possible to carry out, with an entirely negligible induced turbulence, controlled reclamation activities aimed at and limited to only the small percentage of polluted sediments. Once the preliminary reclamation of the polluted superficial stratum of the bottom has been carried out and the muddy material which, given its greater humidity, is more sensitive to turbulence has been removed in a controlled manner, the subsequent engagement of very powerful conventional means makes it possible to dredge the bottom, with the removal of material which, because of its greater density, does not bring about inconveniences.

Variations and/or modifications can be brought to the method for the reclamation of polluted bottoms and to the relative system according to the present invention without departing from the scope of the invention itself as stated in the appended claims.

## Claims

1. A method for the controlled reclamation of bottoms of polluted basins characterized by the fact that it comprises the following steps: removal from the bottom, by means of a floating drawing unit (1), of a superficial stratum containing polluted muds; transportation of said polluted muds to an on-land treatment station (2) ; separation from said muds of the solid particles having a granulometry greater than a predetermined value by means of screening and centrifuging; clarification of the muds by means of their adding with flocculating substances suited to induce the aggregation and precipitation of the solid particles and to allow for the disposal of the water remaining on the surface; mechanical compression of said muds to extract the residual humidity; storing of said muds in removable containers (25) for their transfer to a dump.

2. The method according to claim 1, wherein said muds are removed from said bottom by filling, on the basis of differences in hydrostatic load or, in the case of very shallow waters, with the help of a vacuum system, a plurality of tanks, immersed in proximity to said bottom, which are emptied by means of compressed air.

3. The method according to any of the previous claims, wherein said predetermined value of granulometry is about 8 mm.

4. A system for the controlled reclamation of bottoms of polluted basins, characterized by the fact that it comprises a floating drawing unit (1), supporting means (6, 7) for the removal from said bottom of a superficial stratum containing highly polluted muds, as well as an on-land treatment station (2) for the muds, hydraulically connected to said drawing unit.

5. The system according to claim 4, wherein said drawing unit (1) comprises a motorized boat (5) supporting pneumatic pumping means (6) comprising a body (6a) suited to be immersed in proximity to said bottom and within which a plurality of tanks provided with automatic input and discharge valves are arranged, said tanks being suited to be filled with said muds according to differences in hydrostatic load, said pumping means comprising also a compressor (6c) and a distributor (6b) arranged on said boat, pneumatically and hydraulically connected to said body to provide for the emptying of said tanks by means of compressed air, means (7) for lifting and moving said body being also arranged on said boat (5).

6. The system according to claims 4 and 5, wherein said treatment station comprises at least one vibrating screen, at least one cyclone (9), at least one clarifier (15) and at least one belt filter press (24), arranged in series and suited to be successively passed through by said muds.

7. The system according to claims 4, 5 and 6, wherein buffer tanks (12) are provided for said muds, arranged between said cyclone (9) and said clarifier (15).
